# EUROPEAN PATENT APPLICATION

(11) **EP 4 799 476 A1**
(43) Date of publication of application: **02.09.2026**
(21) Application number: 24882020.1
(22) Date of filing: 30.08.2024
(51) Int. Cl.: A01K 41/04, A01K 41/06

(54) **RACK AND INCUBATION DEVICE**

(30) Priority: 26.10.2023 JP 2023183870
(71) Applicant: Nabel Co., Ltd., Kyoto-shi, Kyoto 601-8444 (JP)
(72) Inventor: NAMBU, Takahiko, Kyoto-shi, Kyoto 601-8444 (JP)
(74) Representative: Müller Hoffmann & Partner
(86) International application number: PCT/JP2024/031156
(87) International publication number: WO 2025/088903

(57) **Abstract**

The present invention is aimed to measure the temperature of an egg placed on a tray without providing a temperature sensor to the tray and without obstructing loading and unloading of the tray, and includes a trolley 4 having a placement part 41 where a tray 10 holding the egg is placed, the trolley 4 including an egg-turning mechanism 42 that turns the egg in the tray 10 by causing the placement part 41 to incline, and a temperature sensor 43 provided at a position where loading and unloading of the tray 10 with respect to the placement part 41 are not obstructed, and where the egg turned by the egg-turning mechanism 42 comes into contact.

## Description

### Technical Field

The present invention relates to a trolley and an incubator.

### Background Art

In an incubator of this kind, measuring eggshell temperatures using contact thermometers in the incubator is being practiced, as disclosed in Patent Literature 1, for example. Such eggshell temperature measurements enable determination of internal conditions of a incubating egg, at least including whether the incubating egg is alive or dead.

For example, the incubator measures eggshell temperatures by attaching a temperature measuring unit with a plurality of contact thermometers to a tray holding a plurality of eggs, or providing contact thermometers to the side walls or on the bottoms of holding seats of the tray.

However, it takes time and effort to attach such a temperature measurement unit or contact thermometers to the tray. Further, the tray requires wiring for supplying power to the temperature measurement unit and for transmitting the measured temperature data, and this requirement makes the wiring complicated. Moreover, the wiring connected to the temperature measurement unit or the contact thermometers provided to the tray becomes an obstacle in loading and unloading the tray with respect to the trolley.

### Citation List

### Patent Literature

Patent Literature 1: JP 2021-145594 A

### Summary of Invention

### Technical Problem

In consideration of the above, the present invention has been made to address the disadvantages described above, and an object of the present invention is to measure the temperature of an egg placed on a tray without providing a temperature sensor to the tray and without obstructing loading and unloading of the tray, on the basis of the idea of bringing the egg into contact with a temperature sensor by taking advantage of the movement of the egg at the time of turning the egg.

### Solution to Problem

That is, a trolley according to the present invention is a trolley including a placement part where a tray holding an egg is placed, the trolley including, an egg-turning mechanism that turns the egg in the tray by causing the placement part to incline, and a temperature sensor provided at a position where loading and unloading of the tray with respect to the placement part are not obstructed, and where the egg turned by the egg-turning mechanism comes into contact.

With this trolley, because the temperature sensor is provided at a position where loading and unloading of the tray are not obstructed, and where the inclined egg comes into contact, the temperature sensor does not become an obstacle in loading and unloading the tray, and the time and the effort in attaching the temperature sensor to the tray, which have been conventionally necessary, are rendered unnecessary. Because it is not necessary to attach a temperature sensor to the tray, wiring of the temperature sensor is simplified, and wiring can be extended along the egg-turning mechanism or the frame of the trolley, for example. With this, power supply to the temperature sensor and transmission of temperature data can be simplified. Further, conventional trays can be used as they are.

Preferably, the temperature sensor comes into contact with the egg that is in the lowermost row of the tray on the placement part having been inclined.

In ordinary egg-turning mechanisms, a tray is inclined about an axis extending along a direction in which the tray is loaded and unloaded. For this reason, the most suitable position as a position where the loading and unloading of the tray is not obstructed is on the outer side of the lowermost row of the tray having been inclined. By using a configuration in which the temperature sensor comes into contact with the egg in the lowermost row of the tray having been inclined, the temperature sensor can be brought into contact with the egg without obstructing the loading and unloading of the tray.

Preferably, the temperature sensor is provided to the egg-turning mechanism or a frame of the trolley.

With this configuration, wiring of the temperature sensor can be provided along the egg-turning mechanism or the frame of the trolley. Examples of the location where the temperature sensor is provided include coupling frames of the egg-turning mechanism, the coupling frames being coupled to the placement part, and a sensor support frame stretched between the coupling frames. The temperature sensor may be provided to the frame of the trolley itself. The temperature sensor may also be provided to a sensor support frame provided to the placement part, or may be provided to the inner surface of a side wall of the placement part.

An incubator according to the present invention includes an incubation room, an air conditioning equipment that conditions the air inside the incubation room, and the trolley described above.

### Advantageous Effects of Invention

According to the present invention configured as described above, with the idea of bringing an egg into contact with a temperature sensor by taking advantage of the movement of the egg at the time of turning the egg, it becomes possible to measure the temperature of the egg placed on a tray, without providing a temperature sensor to the tray and without obstructing the loading and unloading of the tray.

### Brief Description of Drawings

FIG. 1 is a front view schematically illustrating a configuration of an incubator according to one embodiment of the present invention.
FIG. 2 is a front view schematically illustrating a configuration of a trolley according to the embodiment.
FIGS. 3(a) and 3(b) are partial front views illustrating (a) a first inclined state, and (b) a second inclined state, achieved by an egg-turning mechanism according to the embodiment.
FIG. 4 is a front view illustrating a configuration in which temperature sensors are provided to the trolley according to the embodiment.
FIG. 5 is a side view illustrating the configuration in which the temperature sensors are provided to the trolley according to the embodiment.
FIGS. 6(a) and 6(b) are schematic views illustrating (a) a state in which incubation eggs are in contact with the temperature sensors in the first inclined state, and (b) a state in which the incubation eggs are in contact with the temperature sensors in the second inclined state, in the trolley according to the embodiment.
FIGS. 7(a) and 7(b) are schematic views illustrating (a) a horizontal state and (b) a state in which incubation eggs are in contact with temperature sensors in a first inclined state, in a trolley according to a modification.

### Description of Embodiments

One embodiment of an incubator that uses a trolley according to the present invention will now be described with reference to some drawings. Note that all of the drawings described below are schematic representations, with some omissions and exaggerations made as appropriate, to facilitate understanding. The same elements are denoted by the same reference signs, and the descriptions thereof will be omitted as appropriate.

### <Configuration of incubator 100>

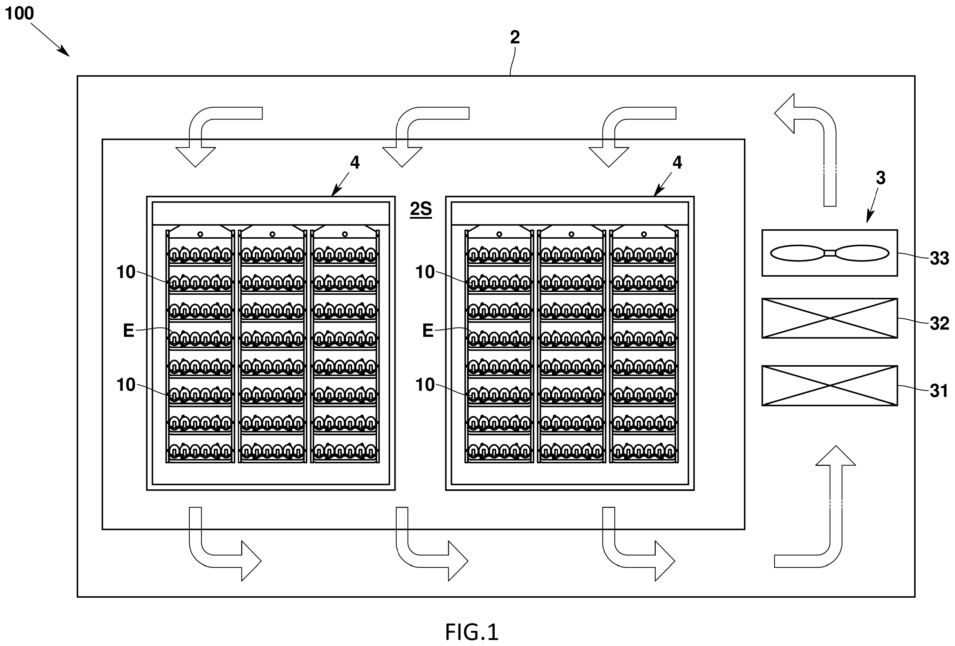

As illustrated in FIG. 1, an incubator 100 according to this embodiment includes a casing 2 forming an incubation room 2S, an air conditioning equipment 3 that conditions the air inside the incubation room 2S, and a trolley 4 provided inside the incubation room 2S.

The casing 2 has the incubation room 2S where a plurality of trays 10 holding incubation eggs E are housed, and in this embodiment, one or more trolleys 4 where a plurality of trays 10 are set are provided. In this embodiment, an example in which two trolleys 4 are provided in the incubation room 2S is illustrated, but the number of trolleys 4 provided in the incubation room 2S may be one or more, without limitation to two.

The air conditioning equipment 3 conditions the air in the incubation room 2S, and adjusts the environment in the incubation room 2S to an environment suitable for the incubation eggs E to hatch. The air conditioning equipment 3 adjusts temperature, humidity, or the like. The air conditioning equipment 3 includes a cooler 31, a heater 32, a heat exchanger, a blower fan 33, or the like may be used.

The air conditioning equipment 3 according to this embodiment conditions the air inside the incubation room 2S by blowing down the air from above the trolleys 4, in the incubation room 2S. The air inside the incubation room 2S may also be conditioned by blowing the air from the side of the trolleys 4.

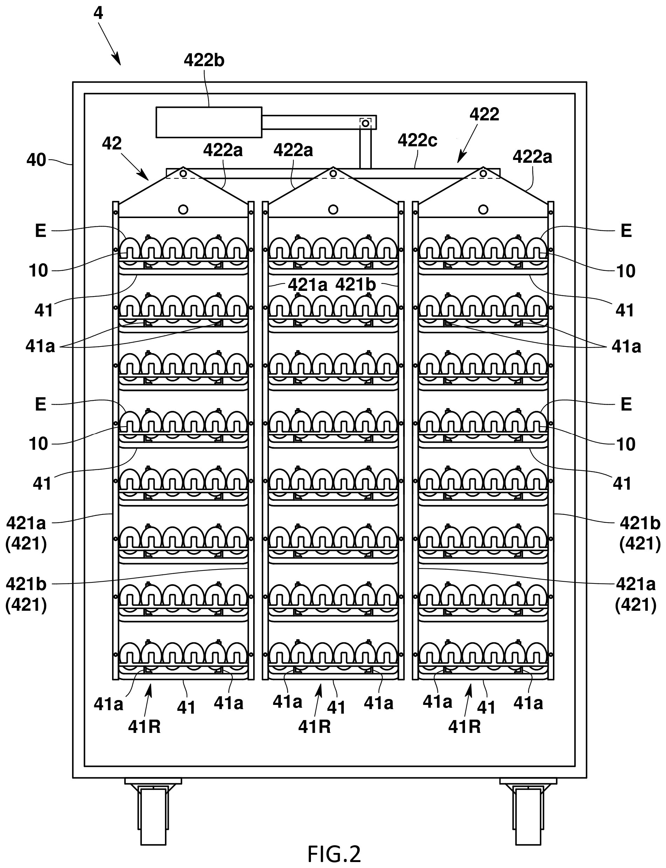

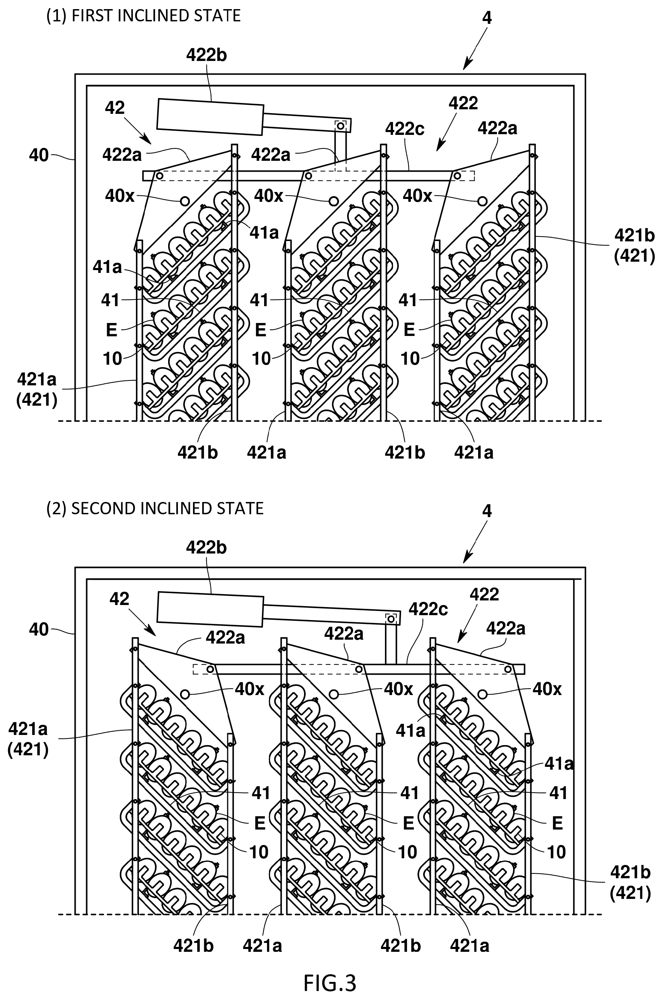

As illustrated in FIGS. 2 and 3, a plurality of trays 10 are placed on the trolleys 4, and the incubation eggs E held in the trays 10 are turned by inclining the plurality of trays 10.

For example, the trolley 4 includes a plurality of placement parts 41 on which trays 10 are placed, and an egg-turning mechanism 42 that turns the eggs by changing the inclinations of the placement parts 41.

The plurality of placement parts 41 are arranged in the up-and-down direction. In this embodiment, one trolley is provided with three placement part columns 41R each of which includes a plurality of placement parts 41 that are arranged along the up-and-down direction. The number of the placement part columns 41R provided to one trolley 4 is not limited to three, and may be any number that is one or more.

Furthermore, each of the placement parts 41 is configured such that the trays 10 can be placed by sliding the trays 10 from the front side, in a horizontal state that is not inclined. For example, each of the placement parts 41 has linear slides 41a along which protrusions provided to the bottom of the tray 10 are slid in the front-rear direction. A plurality of trays 10 can be placed on each of the placement parts 41 in the front-rear direction.

The egg-turning mechanism 42 changes the inclinations of the plurality of placement parts 41 (placement part columns 41R) that are arranged up and down, all at once, and switches the trays 10 between a first inclined state (see FIG. 3(a)) in which the trays 10 are inclined toward one side and a second inclined state (see FIG. 3(b)) in which the trays 10 are inclined toward the other side. The egg-turning mechanism 42 according to this embodiment rotates and inclines the tray 10 about a rotation axis that extends along the front-rear direction. The first inclined state is a state in which the trays 10 (placement parts 41) are inclined downward toward the left, and the second inclined state is a state in which the trays 10 (placement parts 41) are inclined downward toward the right.

For example, the egg-turning mechanism 42 includes a coupling frame 421 that couples a plurality of the placement parts 41 that are arranged up and down (placement part column 41R), and a frame driving unit 422 that is connected to the upper end of the coupling frame 421 and changes the inclinations of the placement parts 41 by driving the coupling frame 421 in the up-and-down direction.

The coupling frame 421 according to this embodiment includes a pair of coupling frames (a left coupling frame 421a and a right coupling frame 421b) that are coupled to the left ends and right ends of the placement parts 41, respectively. The pair of coupling frames 421a, 421b is provided to each of the front and rear ends of the placement parts 41.

The frame driving unit 422 changes the inclinations of the placement parts 41 by causing the pair of coupling frames 421a, 421b to slide up and down, relatively with respect to each other. The frame driving unit 422 includes, for example, a connection member 422a connected to the pair of coupling frames 421a, 421b, and an actuator 422b that causes the connection member 422a to rotate. The connection member 422a is provided to a body frame 40 in a manner rotatable about a rotation shaft 40x at an intermediate position between the pair of coupling frames 421a, 421b, and the actuator 422b causes the connection member 422a to rotate with respect to the body frame 40. The rotation of the connection member 422a causes the pair of coupling frames 421a, 421b coupled to the connection member to slide up and down relatively with respect to each other, and thus causes the inclinations of the placement parts 41 to change. In this embodiment, in order to change the inclinations of the three placement part columns 41R all at once, three connection members 422a are connected by a link mechanism 422c, and are configured to be rotated by the common actuator 422b.

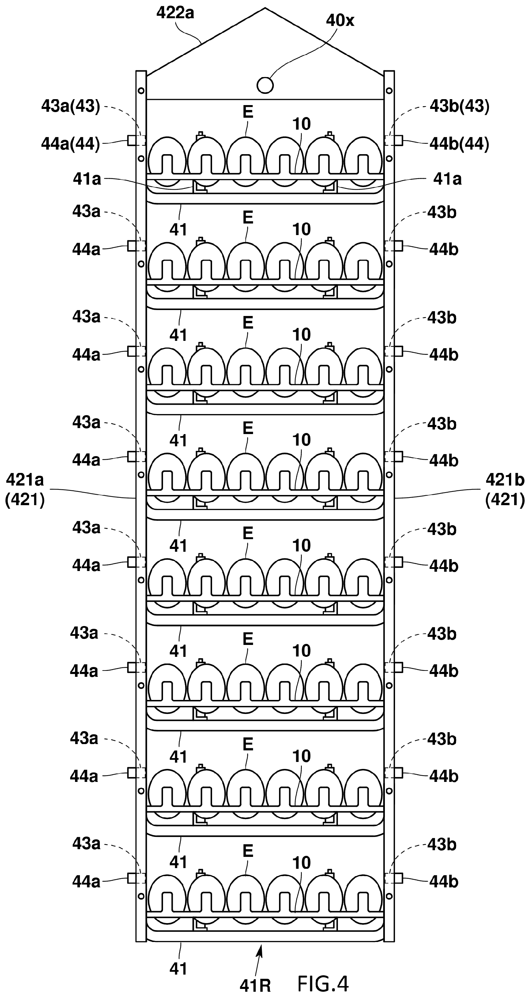

As illustrated in FIGS. 4 to 6, the trolley 4 according to this embodiment is provided with temperature sensors 43 that measure the temperatures of the eggshells by coming into contact with the incubation eggs E.

The temperature sensors 43 are provided at positions where loading and unloading of a tray 10 with respect to a placement part 41 are not obstructed, and at positions where the incubation eggs E turned by the egg-turning mechanism 42 come into contact. The positions where loading and unloading of a tray 10 with respect to a placement part 41 are not obstructed herein are positions outside the space where the tray 10 passes when the tray 10 is slid with respect to the placement part 41 that is in the horizontal state.

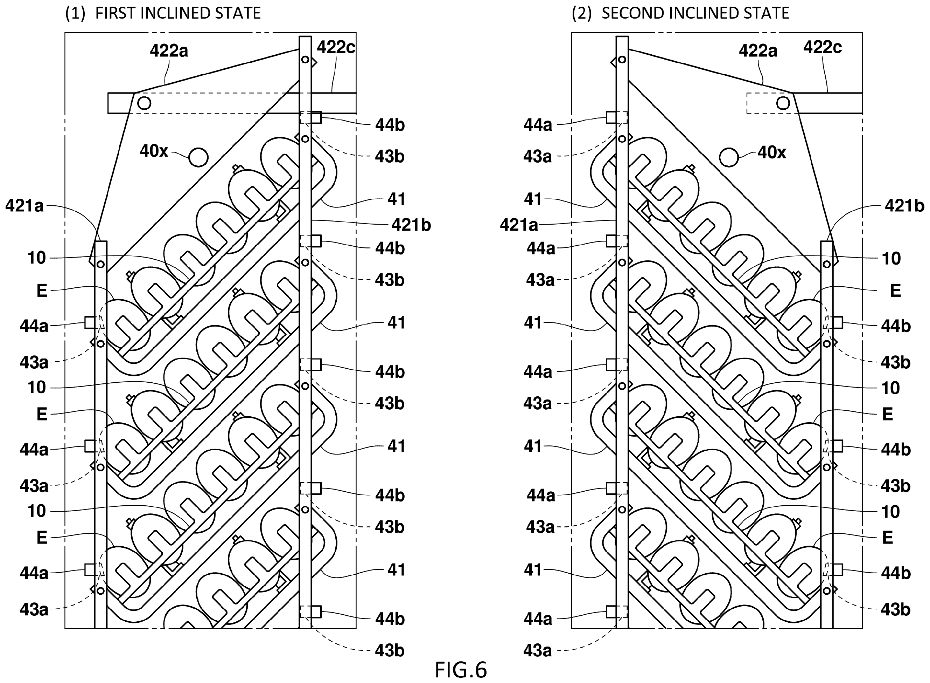

In this embodiment, the temperature sensors 43 include a first temperature sensor 43a coming into contact with an incubation egg E in the lowermost row of the tray 10 in the first inclined state, and a second temperature sensor 43b coming into contact with an incubation egg E in the lowermost row of the tray 10 in the second inclined state. In other words, the first temperature sensor 43a comes into contact with an incubation egg E in the leftmost row of the tray 10 (see FIG. 6(a)), and the second temperature sensor 43b comes into contact with an incubation egg E in the rightmost row of the tray 10 (see FIG. 6(b)).

Furthermore, a plurality of the temperature sensors 43a, 43b are provided so as to come into contact with a plurality of incubation eggs E in one placement part 41. That is, the first temperature sensors 43a come into contact with the plurality of incubation eggs E in the leftmost row of the tray 10, and the second temperature sensors 43b come into contact with the plurality of incubation eggs E in the rightmost row of the tray 10. Furthermore, pluralities of the temperature sensors 43a, 43b are provided so as to come into contact with the plurality of incubation eggs E in the plurality of respective placement parts 41 that are arranged in the up-and-down direction.

For example, a sensor support frame 44 provided to the coupling frames 421 of the egg-turning mechanism 42 supports the temperature sensors 43a, 43b. The sensor support frame 44 includes a first sensor support frame 44a that is provided to the left coupling frames 421a and that supports the first temperature sensors 43a, and a second sensor support frame 44b that is provided to the right coupling frames 421b and that supports the second temperature sensors 43b. Each of the temperature sensors 43a, 43b is supported on corresponding one of the sensor support frames 44a, 44b with an elastic member (not illustrated) therebetween so as to buffer the impact exerted upon the incubation egg E in coming into contact, while pressing the temperature sensor 43a, 43b against the incubation egg E.

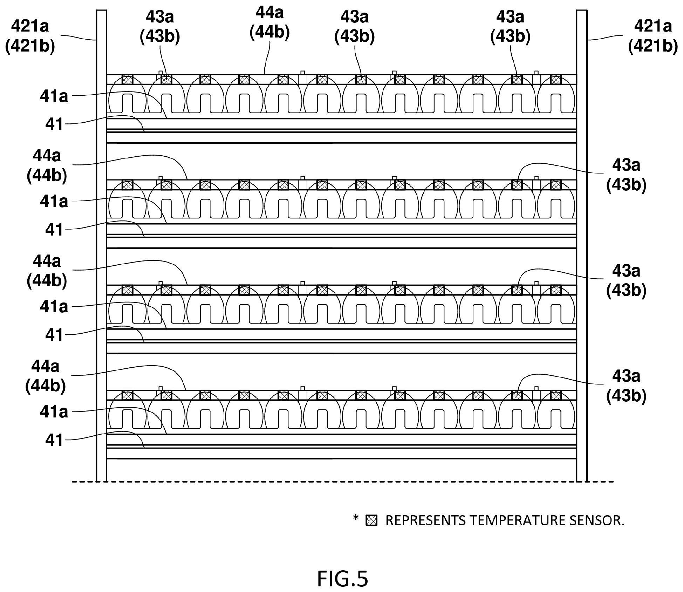

Further, the first sensor support frame 44a is provided in a manner stretched between the left coupling frames 421a that are on the front side and rear side, respectively and the second sensor support frame 44b is provided in a manner stretched between the right coupling frames 421b that are on the front side and rear side, respectively, as illustrated in FIG. 5. Here, the sensor support frames 44a, 44b are provided to the coupling frames 421a, 421b, respectively, in such a manner that the temperature sensors 43a, 43b come into contact with sides of the respective incubation eggs E turned by the egg-turning mechanism 42.

The plurality of first temperature sensors 43a are provided to the first sensor support frame 44a so as to come into contact with the plurality of incubation eggs E in the leftmost row of the tray 10. The plurality of second temperature sensors 43b are provided to the second sensor support frame 44b so as to come into contact with the plurality of incubation eggs E on the rightmost row of the tray 10.

In such a configuration, while the placement part 41 is in the horizontal state, the first temperature sensors 43a on the first sensor support frame 44a are separated from the incubation eggs E on the leftmost row of the tray 10. Further, the second temperature sensors 43b on the second sensor support frame 44b are separated from the incubation eggs E on the rightmost row of the tray 10.

As the placement part 41 is caused to incline, by the egg-turning mechanism 42, to the first inclined state, as illustrated in FIG. 6(a), the first temperature sensors 43a on the first sensor support frame 44a approach the incubation eggs E on the leftmost row of the tray 10, and the first temperature sensors 43a then come into contact with the incubation eggs E on the leftmost row.

By contrast, as the placement part 41 is caused to incline, by the egg-turning mechanism 42, to the second inclined state, as illustrated in FIG. 6(b), the second temperature sensors 43b on the second sensor support frame 44b approach the incubation eggs E on the rightmost row of the tray 10, and the second temperature sensors 43b then come into contact with the incubation eggs E on the rightmost row.

A power line for supplying power to the plurality of temperature sensors 43a, 43b and a communication line for transmitting eggshell temperature data are wired on each of the coupling frames 421a, 421b. The power line is connected to a power supply (not illustrated) provided outside the trolley, and the communication line is connected to a computing device (not illustrated) provided outside the trolley, over the wire or wirelessly. In this manner, according to this embodiment, it is not necessary to provide the configurations for measuring the eggshell temperatures to the trays 10.

The temperature data obtained by the temperature sensors 43a, 43b in this embodiment may be used for determining the internal conditions such as whether the incubation eggs E are alive or dead. That is, the computing device determines the internal condition such as whether the embryos are alive or dead, or activities of the embryos, on the basis of the eggshell temperature data obtained by the plurality of temperature sensors 43a, 43b and the environmental temperature data obtained by an environmental temperature sensor (not illustrated) provided separately. For example, the computing device compares the eggshell temperatures obtained by the temperature sensors 43a, 43b with the environmental temperature obtained by the environmental temperature sensor, and determines that an egg is a living egg when the eggshell temperature is higher than the environmental temperature by a threshold or more. The temperature data obtained by the temperature sensors 43a, 43b in this embodiment may also be used for controlling the temperature inside the incubation room 2S.

### <Advantageous effects achieved by embodiment>

With the incubator 100 according to the embodiment, because the temperature sensors 43a, 43b are provided at positions where loading and unloading of the trays 10 are not obstructed and at positions where the inclined incubation eggs E come into contact, the temperature sensors 43a, 43b do not become obstacles in loading and unloading the trays 10, and the time and the effort in attaching the temperature sensors 43a, 43b to the trays 10, which have been conventionally necessary, are rendered unnecessary. Because it is not necessary to attach the temperature sensors 43a, 43b to the trays 10, wiring of the temperature sensors 43a, 43b is simplified, and wiring can be extended along the egg-turning mechanism 42 or the body frame 40 of the trolley 4, for example. In this manner, power supply to the temperature sensors 43a, 43b and transmission of temperature data can be simplified. Further, conventional trays 10 can be used as they are.

### <Other modifications of present invention>

Note that the present invention is not limited to the embodiment described above.

For example, in the embodiment described above, the temperature sensors are supported on the sensor support frames that are provided to the coupling frames. Alternatively, the temperature sensors may be supported on sensor support frames provided to the placement parts 41, or the temperature sensors may be provided on the left and right side walls of the placement parts 41.

In the embodiment described above, both of the first temperature sensors 43a and the second temperature sensors 43b are provided, but it is also possible for only one of the first temperature sensors 43a and the second temperature sensors 43b to be provided.

Furthermore, although a plurality of temperature sensors 43a, 43b are provided to contact a plurality of the incubation eggs E in one placement part 41, one temperature sensor may be provided to contact one incubation egg E in one placement part 41. Furthermore, the temperature sensors 43a, 43b may be provided in a manner coming into contact with the incubation eggs E on any one of the plurality of placement parts 41 that are arranged in the up-and-down direction.

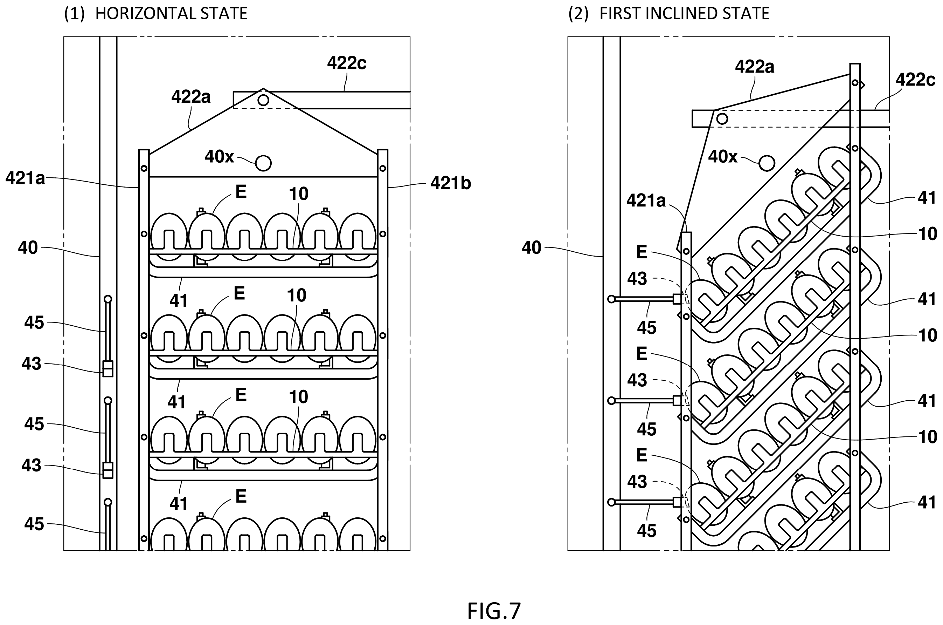

The temperature sensors 43 may be provided to a fixed frame that does not move when the eggs are turned, such as the body frame 40 of the trolley 4. In such a case, the temperature sensors 43 may move in an operative association with the operation of the egg-turning mechanism 42 causing the placement parts 41 to incline (egg-turning operation of the egg-turning mechanism 42), as illustrated in FIG. 7, and may be pressed against the incubation eggs E held on the tray 10.

For example, a mechanism for this associating operation includes a movable body 45 that is rotatably or movably provided to the fixed frame such as the body frame 40 and to which a temperature sensor 43 is attached, and a transmission mechanism (not illustrated) such as a link mechanism that transmits the movement of the egg-turning mechanism 42 (e.g., the movement of the coupling frame 421) to the movable body 45. Then, as the egg-turning mechanism 42 makes an egg-turning operation, the transmission mechanism transmits the movement of the egg-turning mechanism 42 (e.g., the movement of the coupling frame 421) to the movable body 45, and causes the movable body 45 to rotate or to move, so that the temperature sensors 43 are brought into contact with the incubation egg E.

Furthermore, the present invention is not limited to the embodiment described above, and various modifications are may be made within the scope not departing from the gist of the present invention.

### Industrial Applicability

According to the present invention, the temperature of the eggs placed on the tray can be measured without providing a temperature sensor on the tray and without obstructing loading and unloading of the tray.

### Reference Signs List

- 100: incubator
- 10: tray
- 2S: incubation room
- 3: air conditioning equipment
- 4: trolley
- 40: body frame
- 41: placement part
- 42: egg-turning mechanism
- 43: temperature sensor

## Claims

1. A trolley including a placement part where a tray holding an egg is placed, the trolley comprising:
an egg-turning mechanism that turns the egg in the tray by causing the placement part to incline; and
a temperature sensor provided at a position where loading and unloading of the tray with respect to the placement part are not obstructed, and where the egg turned by the egg-turning mechanism comes into contact.

2. The trolley according to claim 1, wherein the temperature sensor comes into contact with an egg that is in a lowermost row of the tray on the placement part having been inclined.

3. The trolley according to claim 1, wherein the temperature sensor is provided to the egg-turning mechanism or a frame of the trolley.

4. An incubator comprising:
an incubation room;
an air conditioning equipment that conditions air inside the incubation room; and
the trolley according to any one of claims 1 to 3.
